# FASCICULE DE BREVET EUROPEEN

(11) **EP 1 327 052 B1**
(45) Date de publication et mention de la délivrance du brevet: **01.12.2004**
(21) Numéro de dépôt: 01972210.7
(22) Date de dépôt: 26.09.2001
(51) Int. Cl.: E21B 43/08, E21B 43/12, B01D 29/15

(54) **ELEMENT DE DRAIN AYANT UNE CREPINE CONSTITUEE DE TIGES CREUSES POUR COLLECTER NOTAMMENT DES HYDROCARBURES**
DRAINAGE-ELEMENT MIT FILTERVORRICHTUNG BESTEHEND AUS HOHLEN SCHAFTEN ZUR SAMMLUNG VON INSBESONDER KOHLENWASSERSTOFFEN
DRAIN ELEMENT COMPRISING A LINER CONSISTING OF HOLLOW RODS FOR COLLECTING IN PARTICULAR HYDROCARBONS

(30) Priorité: 09.10.2000 FR 0012885
(43) Date de publication de la demande: 16.07.2003
(73) Titulaire: Johnson Filtration Systems, 86530 Availles en Chatellerault (FR)
(72) Inventeur: REIG, Raphael, F-86000 Poitiers (FR); BRUXELLE, David, F-86000 Poitiers (FR); LAVERNHE, Philippe, O., F-86000 Poitiers (FR)
(74) Mandataire: Prugneau, Philippe
(86) Numéro de dépôt international: PCT/FR2001/002976
(87) Numéro de publication internationale: WO 2002/031314

(56) Documents cités:
- WO-A-00/45031
- GB-A- 2 325 949
- US-A- 4 088 580
- US-A- 5 803 179
- US-A- 5 868 200

## Description

L'invention concerne un élément de drain pour collecter notamment des hydrocarbures, comprenant un tamis entourant un cylindre d'aspiration s'étendant selon une direction longitudinale.

L'invention s'applique par exemple à l'exploitation d'hydrocarbure dans le cadre d'une production avec un forage horizontal ou fortement incliné. Dans un tel cadre, plusieurs éléments de drain sont montés bout à bout pour former un drain traversant un réservoir d'hydrocarbure et une aspiration est créée au niveau d'une installation d'extraction montée en surface pour remonter par exemple du pétrole brut depuis le réservoir qui est situé en profondeur. Dans une telle installation, la longueur du drain est couramment de l'ordre de 1000 mètres et la longueur d'un élément de drain est généralement de 10 mètres environ. Chaque élément de drain filtre et collecte de l'hydrocarbure qui migre depuis le réservoir vers le cylindre d'aspiration et tous les cylindres d'aspiration sont connectés bout à bout pour que l'ensemble de l'hydrocarbure. collecté sur toute la longueur du drain soit transporté vers la surface.

Lorsqu'un régime d'écoulement s'établit, il apparaît des pertes de charge importantes entre le talon du drain (la partie la plus proche de la surface) et l'extrémité souterraine du drain de sorte que le débit d'hydrocarbure que produit un élément de drain est significativement plus élevé au niveau du talon du drain qu'au niveau de son extrémité souterraine. II s'ensuit que le réservoir d'hydrocarbure se vide au niveau du talon et que du gaz ou de l'eau sont alors aspirés au niveau du talon ce qui perturbe la production et provoque l'arrêt de l'exploitation du réservoir alors que celui-ci contient encore une grande quantité d'hydrocarbure dans une zone située autour de l'extrémité souterraine du drain. Ce phénomène est connu sous le nom de "coning".

Pour résoudre ce problème, il est connu des documents de brevet GB-2325949 et US-5435393, des éléments de drain introduisant une perte de charge pouvant être modulée. On place ainsi des éléments ayant une faible perte de charge vers l'extrémité souterraine du drain pour augmenter le débit dans cette zone et des éléments de drain à perte de charge importante dans le talon du drain pour réduire le débit dans cette zone. Dans le drain ainsi constitué, le débit des différents éléments est homogène de sorte que le réservoir d'hydrocarbure se vide uniformément sur toute la longueur du drain. Dans le document US-5435393, l'hydrocarbure est collecté par une bague formant crépine positionnée entre le cylindre d'aspiration et le tamis entourant le cylindre. Cette bague collecte l'hydrocarbure et comprend un labyrinthe de canaux que doit parcourir l'hydrocarbure pour migrer vers l'intérieur du cylindre d'aspiration. II est possible de modifier la longueur du labyrinthe en obturant certains canaux de la bague avec des vis de manière à modifier la perte de charge introduite. La bague d'un tel élément de drain est une pièce complexe dont la fabrication est très coûteuse, et d'autre part, la collecte de l'hydrocarbure n'est réalisée que dans la zone de la bague ce qui limite la production. Le document US-4088580 divulgue une crépine telle gue définie par le préambule de la revendication 1 et destinée à équiper un élément de drain pour collecter des hydrocarbures. Cette crépine connue a un tamis constitué par un fil métallique enroulé autour et fixé à une structure tabulaire formée par des tiges pleines qui s'étendent selon une direction longitudinale entre deux bagues, les tiges étant insérées par leurs deux extrémités dans les deux bagues en étant régulièrement réparties à la périphérie des bagues. Avec cet agencement, le fluide pénètre la crépine en passant à travers les enroulements du fil métallique et entre les tiges et il n'est pas possible de modifier simplement une perte de charge dans le drain.

Le but de l'invention est de remédier à ces inconvénients en proposant une crépine et un élément de drain d'une conception plus simple.

A cet effet, l'invention a pour objet une crépine telle que définie par la revendication 1 et destinée à un élément de drain pour collecter notamment des hydrocarbures . Une telle construction fait que l'hydrocarbure est collecté par le tamis lui-même de la crépine ce qui simplifie la construction, et la perte de charge introduite par l'élément de drain peut être modifiée en jouant sur le nombre de tiges creuses de collecte de la crépine communiquant avec l'intérieur du cylindre d'aspiration de l'élément de drain.

La crépine selon l'invention peut comprendre un collecteur annulaire monté autour du cylindre d'aspiration et définissant avec le cylindre une cavité torique qui communique avec l'intérieur du cylindre par l'intermédiaire de fentes du cylindre prévues à cet effet. Le collecteur est muni de trous s'étendant selon la direction longitudinale et débouchant sur ladite cavité torique, ces trous étant destinés à recevoir des tiges creuses du tamis pour les faire communiquer avec l'intérieur du cylindre d'aspiration par l'intermédiaire de ladite cavité torique. Avec cet agencement, le collecteur qui assure la communication entre les tiges de collecte et l'intérieur du cylindre peut être monté par frettage sur le cylindre. Le collecteur peut comprendre des trous radiaux s'étendant radialement par rapport à l'axe longitudinal, chaque trou radial communiquant avec un trou longitudinal correspondant, chaque trou radial étant agencé pour recevoir une vis destinée à interrompre ou à libérer la communication entre le perçage longitudinal correspondant et la cavité torique. Avec cet agencement, le nombre de tiges de collecte communiquant avec l'intérieur du cylindre d'aspiration d'un élément de drain pourra être réglé sur site, avant l'introduction de l'élément de drain dans le forage. L'utilisation de vis à tétons ou de vis simples peuvent faciliter l'opération de réglage. Selon un agencement particulier de la crépine et de l'élément de drain selon l'invention, au moins une tige du tamis est une tige creuse sans orifice latéral pour former une tige de transport et au moins une tige de collecte communique avec l'intérieur du cylindre par l'intermédiaire d'une tige de transport ou de plusieurs tiges de transport raccordées en série, reliant l'intérieur du cylindre à une extrémité de ladite tige de collecte. Avec cet agencement, la perte de charge de chaque tige de collecte peut encore être augmentée en connectant certaines extrémités des tiges creuses du tamis .les unes aux autres. La crépine avec l'élément de drain peut comprendre un premier collecteur annulaire à une de ses extrémités pour relier des tiges à l'intérieur du cylindre et un second collecteur annulaire à son autre extrémité, ledit second collecteur étant muni de trous longitudinaux destinés à recevoir des tiges creuses et des canaux reliant certains trous longitudinaux successifs pour raccorder en série deux tiges successives. Avec cet agencement, la connexion de deux tiges en série peut être réalisée au niveau du second collecteur.

L'invention sera maintenant décrite plus en détail, et en référence aux dessins annexés qui en illustrent une forme de réalisation à titre d'exemple non limitatif.
La figure 1 est une représentation schématique d'un élément de drain.
La figure 2 est une vue en coupe partielle du tamis de l'élément de drain selon l'invention.
La figure 3 est une vue en coupe partielle de l'élément de drain selon l'invention.
La figure 4 est une représentation schématique d'une tige de collecte selon l'invention.
Les figures 5 est une représentation schématique d'ensemble d'un élément de drain selon l'invention.
Les figures 6 et 7 sont des vues en coupe d'un exemple de collecteur annulaire de l'élément de drain selon l'invention.
La figure 8 est une représentation partielle d'un second collecteur de la l'élément de drain selon l'invention.

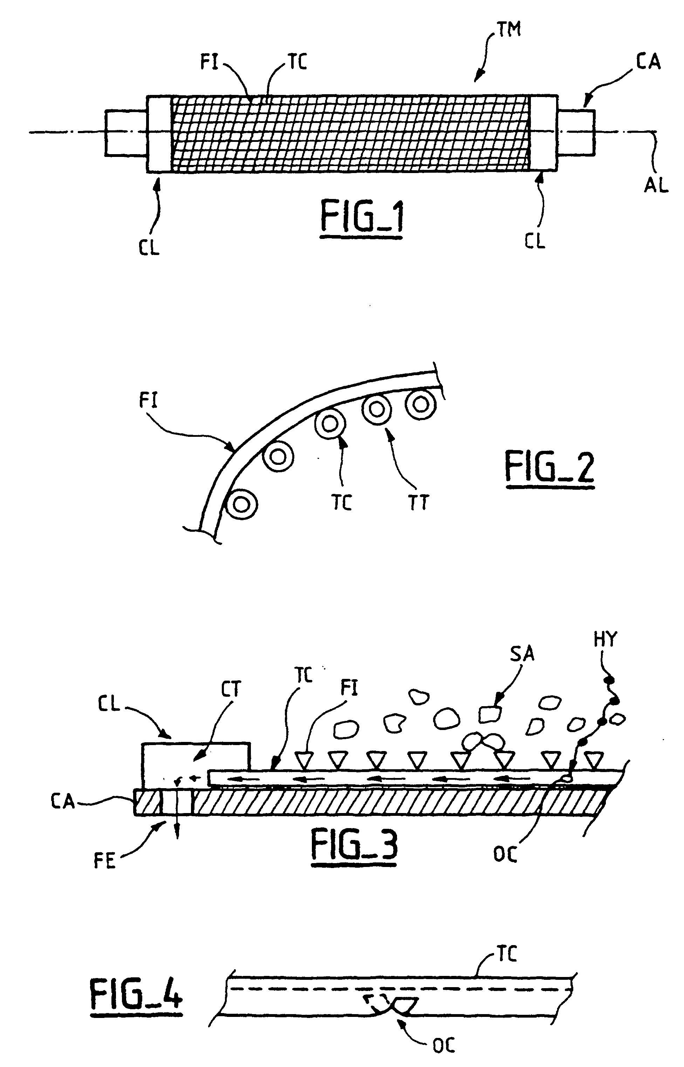

L'élément de drain selon l'invention comprend un cylindre d'aspiration CA qui s'étend longitudinalement selon l'axe LA, comme visible sur la figure 1. Ce cylindre d'aspiration est entouré d'un tamis TM, par exemple métallique, formant crépine, constitué de tiges qui s'étendent longitudinalement autour du cylindre CA. Ces tiges sont solidaires d'un fil FI les entourant pour former le tamis TM. Ce fil FI est soudé auxdites tiges avec par exemple un procédé de soudage par résistance électrique et il entoure les tiges en décrivant une forme d'hélice selon l'axe longitudinal AL. Le tamis TM a ainsi la forme d'un cylindre entourant le cylindre d'aspiration CA et il est maintenu au cylindre d'aspiration CA par l'intermédiaire de deux collecteurs annulaires CL également montés autour du cylindre CA, chaque collecteur étant solidaire d'une extrémité du tamis cylindrique TM. Ces collecteurs pourront par exemple être frétés sur le cylindre CA.

Comme visible sur la figure 2, les tiges TT, TC de l'élément de drain selon l'invention sont des tiges tubulaires creuses, de telle manière que la collecte et le transport de l'hydrocarbure vers l'intérieur du cylindre d'aspiration CA soient réalisés par ces tiges qui forment le tamis TM.

Plus particulièrement, certaines tiges sont des tiges creuses ayant un orifice latéral OC pour former des tiges de collecte TC. Ces tiges TC ont une extrémité qui communique avec l'intérieur du cylindre d'aspiration CA comme représenté sur la figure 3. De cette manière, l'hydrocarbure HY est filtré par le tamis TM pour être débarrassé d'impuretés telles que du sable SA, avant d'être aspiré par un orifice OC pour être dirigé vers l'intérieur du cylindre d'aspiration CA. Dans la figure 3 il a été représenté une telle tige de collecte TC qui est reliée à l'intérieur du cylindre d'aspiration en ayant l'une de ses extrémités connectée au collecteur CL. Cette tige communique ainsi avec une cavité interne CT du collecteur qui communique elle-même avec l'intérieur du cylindre CA par l'intermédiaire de fentes FE du cylindre prévues à cet effet. L'autre extrémité de cette tige, qui n'est pas représentée est par exemple obturée. L'orifice latéral OC réalisé dans la tige de collecte pourra par exemple être un perçage comme représenté dans la figure 3 ou bien obtenu par sciage partiel de la tige, comme représenté dans la figure 4.

Le tamis TM de la tige selon l'invention pourra comprendre une pluralité de tiges de collecte TC, aptes à communiquer avec l'intérieur du cylindre CA par l'intermédiaire d'un collecteur. Ce collecteur pourra comprendra alors des dispositifs pour obturer ou ne pas obturer l'extrémité d'une tige. Il sera ainsi possible d'augmenter la perte de charge introduite par l'élément de drain en diminuant le nombre de tiges de collecte TC communiquant avec l'intérieur du cylindre d'aspiration, et de diminuer cette perte de charge en augmentant le nombre de tiges communiquant avec l'intérieur du cylindre d'aspiration. Il est aussi possible de modifier la perte de charge en jouant sur le nombre d'orifices latéraux que comprennent les tiges de collecte.

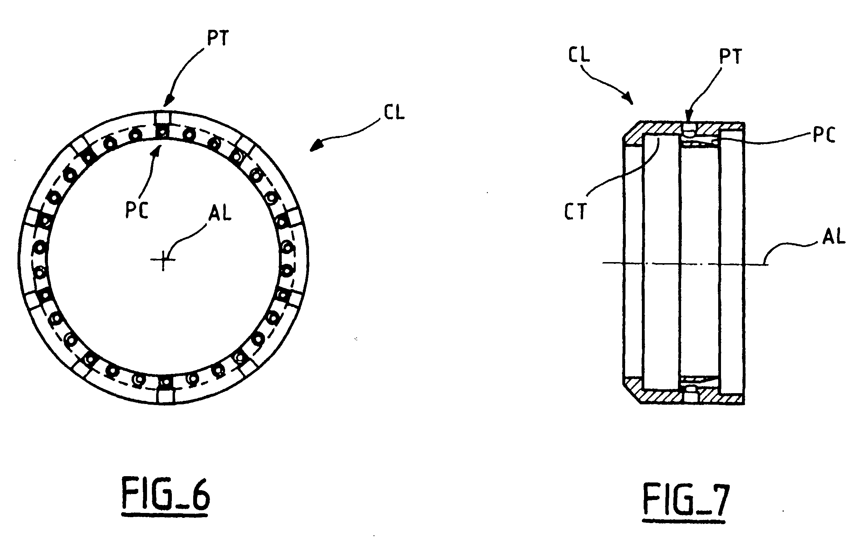

Un tel collecteur CL a une forme sensiblement annulaire comme représenté dans les figures 6 et 7, pour entourer le cylindre CA, et pour être éventuellement monté sur ce cylindre par frettage. Il se présente sous la forme d'une bague qui comprend sur une de ses faces normale à l'axe longitudinal AL une pluralité de trous longitudinaux PC, pouvant être des perçages, et qui sont destinés à recevoir des tiges du tamis TM pour maintenir ce tamis sur le cylindre d'aspiration CA. Ce collecteur comprend un évidemment dans sa partie interne définissant avec le cylindre une cavité torique CT, visible sur les figures 3 et 7. La cavité torique CT ainsi constituée communique avec l'intérieur du cylindre d'aspiration CA par l'intermédiaire de fentes FE du cylindre prévues à cet effet, et disposées en regard de ladite cavité torique. Les perçages PC débouchent sur l'intérieur de cette cavité pour faire communiquer les tiges correspondantes avec cette cavité. Ce collecteur permet ainsi de faire communiquer une pluralité de tiges creuses avec l'intérieur du cylindre d'aspiration par l'intermédiaire de la cavité CT. Plus particulièrement, ce collecteur comprend aussi des trous radiaux PT taraudés disposés radialement par rapport à l'axe longitudinal AL, et communiquant chacun avec un perçage correspondant PC. Chaque trou radial PT, qui peut être obtenu par perçage, débouche sur une surface externe du collecteur pour être accessible depuis l'extérieur. Avec ces perçages radiaux PT, il est possible d'obturer l'extrémité de la tige correspondante en introduisant une vis de grande longueur qui va atteindre le fond du perçage correspondant PC ou de ne pas obturer cette extrémité en y introduisant une vis de faible longueur pour libérer le perçage PC correspondant.

Avec un tel collecteur, la perte de charge introduite par l'élément de drain peut être ajustée sur site, en choisissant le nombre de tiges de collecte communiquant avec l'intérieur du cylindre d'aspiration.

Dans l'élément de drain selon l'invention la perte de charge induite par une tige de collecte TC peut encore être augmentée en reliant cette tige de collecte à l'intérieur du cylindre d'aspiration par l'intermédiaire d'une tige de transport TT ou de plusieurs tiges de transport TT connectées en série. La perte de charge induite est ainsi augmentée par allongement du chemin que doit parcourir le fluide depuis l'orifice de collecte OC pour atteindre l'intérieur du cylindre CA. Plus particulièrement, les tiges de transport TT sont des tiges tubulaires creuses du tamis pouvant être réalisées dans le même matériau que les tiges de collecte, mais ne présentant pas nécessairement d'orifice de collecte.

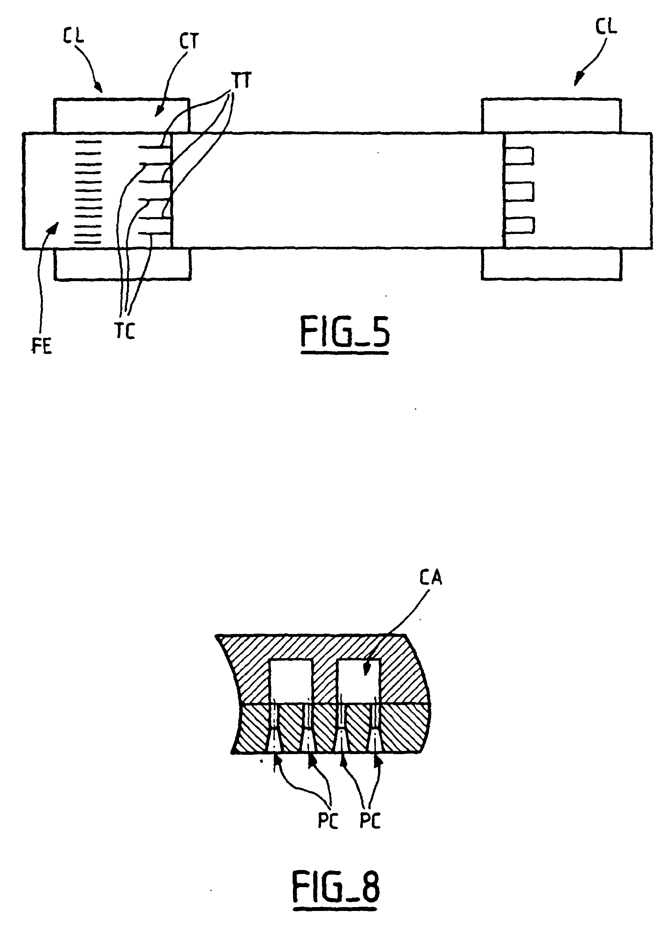

Comme visible sur la figure 5, le tamis TM pourra comprendre par exemple une alternance de tiges de collecte TC et de tiges de transport TT reliées deux à deux. Dans une telle configuration, une tige de collecte aura une extrémité obturée, son autre extrémité reliée à une extrémité d'une tige de transport correspondante, et la tige de transport aura sa seconde extrémité non obturée pour être reliée à l'intérieur du cylindre CA. Il va de soi que cette configuration est donnée à titre d'exemple non limitatif et que d'autres configurations sont envisageables comme par exemple une alternance d'une tige de collecte TC et de deux tiges de transport TT, en vue d'associer de façon similaire une tige de collecte à deux tiges de transport raccordées en série.

Plus particulièrement, les tiges de transport et les tiges de collecte pourront être connectées en série par un second collecteur CL. Un tel second collecteur CL aura une forme sensiblement proche de celle illustrée dans les figures 6 et 7, tout en comprenant des canaux reliant des perçages PC successifs, comme représenté sur la figure 8, de sorte que deux perçages successifs seront reliés entre eux par un canal CN au lieu d'être reliés à une cavité torique. De cette manière, en plaçant un premier collecteur tel que représenté dans les figures 6 et 7 à une extrémité de l'élément de drain, et un second collecteur tel que décrit dans la figure 8 à l'autre extrémité de l'élément de drain, on obtient l'association de tiges décrite dans la figure 5.

Comme on le voit, dans l'élément de drain selon l'invention, ce sont les tiges constituant le tamis qui collectent et transportent l'hydrocarbure vers l'intérieur du cylindre d'aspiration, et ces tiges peuvent être associées selon une grande variété de combinaisons, en vue d'ajuster au mieux la perte de charge introduite par l'élément de drain.

## Revendications

1. Crépine ayant un tamis de filtration constitué par un fil métallique (FI) enroulé autour et fixé à une structure tubulaire formée par des tiges qul s'étendent selon une direction longitudinale (AL) entre deux bagues, les tiges étant insérées par leurs deux extrémités dans les deux bagues en étant régulièrement réparties à la périphérie des bagues, l'une des bagues comportant une cavité intérieure (CT), **caractérisée en ce que** une ou plusieurs des tiges est ou sont des tiges creuses (TC) qui comportent chacune un orifice latéral (OC) et qui communiquent avec la cavité intérieure de la bague par une de leurs extrémités de telle sorte qu'un fluide peut pénétrer de l'extérieur de la crépine jusqu'à la cavité intérieure de la bague ou inversement.

2. Elément de drain pour collecter notamment des hydrocarbures, comprenant une crépine selon la revendication 1 dans laquelle le tamis de filtration de la crépine entoure un cylindre d'aspiration (CA) sur lequel sont montées les deux bagues (CL) pour constituer un système pour régler la perte de charge introduite par l'élément de drain, le cylindre d'aspiration (CA) communiquant avec ladite cavité intérieure (CT) de la bague de telle sorte que l'hydrocarbure peut être amené avec un débit contrôlé de l'extérieur de la crépine vers l'intérieur du cylindre d'aspiration à travers les tiges creuses du tamis de filtration.

3. Elément de drain selon la revendication 2, dans lequel des canaux. (CN) sont formés à l'intérieur des bagues (CL) pour raccorder-les unes aux autres les tiges creuses avec possibilité de modifier la perte de charge introduite par l'élément de drain à l'aide de vis montées dans les bagues depuis l'extérieur de celles-ci pour obturer les canaux (CN).

4. Elément de drain selon la revendication 3, dans lequel les tiges incluent d'autres tiges creuses sans orifice latéral forment des tiges de transport (TT) et dans lequel les vis sont montées de telle manière à raccorder l'orifice latéral (OC) d'une tige creuse de collecte (TC) à ladite cavité intérieure (CT) de la bague par l'intermédiaire d'une ou plusieurs tiges creuses de transport (TT).

5. Elément de drain selon l'une des revendications 1 à 4, dans lequel l'orifice latéral (OC) de chaque tige creuse est réalisé par perçage ou sciage partiel de la tige creuse.

6. Elément de drain selon l'une des revendications 2 à 5, dans lequel la dite cavité intérieure (CT) de la bague communique avec l'intérieur du cylindre d'aspiration (CA) par des fentes (FE) formées dans le cylindre d'aspiration.

7. Elément de drain selon l'une des revendications 2 à 6, dans lequel les bagues (CL) sont frettées sur le tube d'aspiration (CA).

## Patentansprüche

1. Siebrohr mit einem Filtersieb, bestehend aus einem Metalldraht (FI), der um eine rohrförmige Struktur gewickelt und daran befestigt ist, die aus sich in Längsrichtung (AL) zwischen zwei Ringen erstreckenden Stangen gebildet ist, wobei die Stangen mit ihren beiden Enden in die beiden Ringe eingefügt sind und gleichmäßig am Umfang der Ringe verteilt sind, wobei einer der Ringe einen inneren Hohlraum (CT) aufweist, **dadurch gekennzeichnet, dass** eine oder mehrere Stangen eine Hohlstange ist oder Hohlstangen (TC) sind, die alle eine seitliche Öffnung (OC) aufweisen und mit dem inneren Hohlraum des Ringes durch eines ihrer Enden verbunden sind, so dass eine Flüssigkeit die Außenseite des Siebrohrs bis in den inneren Hohlraum des Ringes oder umgekehrt durchdringen kann.

2. Drainageelement zum Sammeln insbesondere von Kohlenwasserstoffen, bestehend aus einem Siebrohr gemäß Anspruch 1, in dem das Filtersieb des Siebrohrs einen Ansaugzylinder (CA) umgibt, auf den zwei Ringe (CL) montiert sind, um ein System zur Regelung des durch das Drainageelement eingebrachten Druckverlustes zu bilden, wobei der Ansaugzylinder (CA) mit besagtem inneren Hohlraum (CT) des Ringes verbunden ist, so dass der Kohlenwasserstoff durch die Hohlstangen des Filtersiebes in kontrolliertem Durchsatz von der Außenseite des Siebrohres zum Innenraum des Ansaugzylinders gebracht werden kann.

3. Drainageelement gemäß Anspruch 2, in dem Kanäle (CN) innen in den Ringen (CL) ausgebildet sind, um die Hohlstangen untereinander zu verbinden, mit der Möglichkeit, den durch das Drainageelement eingebrachten Druckverlust mit Hilfe von Schrauben zu verändern, die von außen zum Verschließen der Kanäle (CN) in die Ringe montierbar sind.

4. Drainageelement gemäß Anspruch 3, in dem die Stangen noch andere Hohlstangen ohne seitliche Öffnung umfassen, die als Transportstangen (TT) ausgebildet sind und in die die Schrauben so angebracht werden, dass sie die seitliche Öffnung (OC) einer hohlen Sammelstange (TC) mit besagtem inneren Hohlraum (CT) des Ringes über eine oder mehrere hohle Transportstangen (TT) verbinden.

5. Drainageelement gemäß einem der Ansprüche 1 bis 4, in dem die seitliche Öffnung (OC) in jeder Hohlstange durch Bohren oder teilweises Einsägen der Hohlstange hergestellt wird.

6. Drainageelement gemäß einem der Ansprüche 2 bis 5, in dem besagter innerer Hohlraum (CT) des Ringes mit dem Innenraum des Ansaugzylinders (CA) durch im Ansaugzylinder ausgebildete Schlitze (FE) verbunden ist.

7. Drainageelement gemäß einem der Ansprüche 2 bis 6, in dem die Ringe (CL) durch Aufschrumpfen auf das Ansaugrohr (CA) aufgebracht werden.

## Claims

1. Strainer having a filtration screen constituted by a metal wire (FI) wound around and fixed to a tubular structure formed by rods, which extend in a longitudinal direction (AL) between two rings, the rods being inserted via their two ends into the two rings while being regularly distributed at the periphery of the rings, one of the rings including an internal cavity (CT), **characterised in that** one or more of the rods is or are hollow rods (TC), which each include a lateral orifice (OC) and which communicate with the internal cavity of the ring via one of their ends, so that a fluid can penetrate from outside the strainer into the internal cavity of the ring, or vice versa.

2. Drain element for collecting hydrocarbons in particular, comprising a strainer according to Claim 1, in which the filtration screen of the strainer encloses a suction cylinder (CA), on which the two rings (CL) are fitted in order to constitute a system for adjusting the head loss introduced by the drain element, the suction cylinder (CA) communicating with the said internal cavity (CT) of the ring so that hydrocarbon can be conveyed with a controlled flow rate from outside the strainer towards the inside of the suction cylinder, through the hollow rods of the filtration screen.

3. Drain element according to Claim 2, in which channels (CN) are formed inside the rings (CL) in order to connect the hollow rods together, with the option of modifying the head loss introduced by the drain element with the aid of screws which are fitted in the rings, from outside the latter, in order to close off the channels (CN).

4. Drain element according to Claim 3, in which the rods include other hollow rods without a lateral orifice, forming transport rods (TT), and in which the screws are fitted so as to connect the lateral orifice (OC) of a hollow collection rod (TC) to the said internal cavity (CT) of the ring by means of one or more hollow transport rods (TT).

5. Drain element according to one of Claims 1 to 4, in which the lateral orifice (OC) of each hollow rod is made by partially drilling or sawing the hollow rod.

6. Drain element according to one of Claims 2 to 5, in which the said internal cavity (CT) of the ring communicates with the inside of the suction cylinder (CA) via slots (FE) formed in the suction cylinder.

7. Drain element according to one of Claims 2 to 6, in which the rings (CL) are interference-fitted on the suction tube (CA).
